# EUROPEAN PATENT APPLICATION

(11) **EP 4 398 661 A1**
(43) Date of publication of application: **10.07.2024**
(21) Application number: 21955548.9
(22) Date of filing: 03.09.2021
(51) Int. Cl.: H04W 72/00, H04W 4/00, H04L 5/00

(54) **SENSING SIGNAL CONFIGURATION METHOD AND APPARATUS, USER EQUIPMENT, NETWORK SIDE DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Kudlek, Franz Thomas
(86) International application number: PCT/CN2021/116562
(87) International publication number: WO 2023/029015

(57) **Abstract**

The present disclosure provides a sensing signal configuration method and apparatus, a user equipment, a network side device and a storage medium, and belongs to the technical field of communication. The method includes that: a network side device can determine sensing signal configuration information, and send the sensing signal configuration information to at least one of a sensing signal sending end or a sensing signal receiving end, so that the sensing signal sending end and the sensing signal receiving end perform receiving and sending transmission on a sensing signal based on the sensing signal configuration information. Therefore, the sensing signal configuration method provided by the present disclosure can avoid a transmission conflict between the sensing signal and receiving signals of other signal receiving ends, reduce interference of the sensing signal to other signal receiving ends, and improve transmission performance of the communication system.

## Description

### TECHNICAL FIELD

The present disclosure relates to the technical field of communication, and in particular, to a sensing signal configuration method and apparatus, a user equipment, a network side device, and a storage medium.

### BACKGROUND

As a new technology, wireless sensing technology is usually used to implement motion detection, gesture recognition, biometric measurement, and the like. The wireless sensing technology mainly includes: a sensing signal sending end sends a sensing signal to a sensing signal receiving end, where the sensing signal is blocked by a reflector in a transmission process, so that the sensing signal generates transmission effects such as reflection, diffraction, transmission, phase change, Doppler shift, and signal strength change, and based on this, the sensing signal receiving end can obtain information of the reflector by sensing the received sensing signal, so as to realize motion detection, gesture recognition and biometric measurement, etc.

However, in related arts, transmission of a sensing signal may interfere with other signal receiving ends, which may reduce transmission performance of a communication system.

### SUMMARY

The disclosure provides a sensing signal configuration method and apparatus, a user equipment, a network side device and a storage medium, and aims to solve the technical problem in prior arts that a sensing signal interferes with other signal receiving ends, which leads to reduced overall performance of the system.

An aspect of embodiments of the present disclosure provides a sensing signal configuration method, performed by a network side device, including:
determining sensing signal configuration information, where the sensing signal configuration information includes at least one of: type information of a sensing signal, resource configuration information of the sensing signal, or service information corresponding to the sensing signal; and
sending the sensing signal configuration information to at least one of a sensing signal sending end or a sensing signal receiving end.

Another aspect of embodiments of the present disclosure provides a sensing signal configuration method, performed by a sensing signal sending end, including:
receiving sensing signal configuration information sent by a network side device, where the sensing signal configuration information includes at least one of: type information of a sensing signal, resource configuration information of the sensing signal, or service information corresponding to the sensing signal; and
sending the sensing signal to a sensing signal receiving end based on the sensing signal configuration information.

Another aspect of embodiments of the present disclosure provides a sensing signal configuration method, performed by a sensing signal receiving end, including:
receiving sensing signal configuration information sent by a network side device, where the sensing signal configuration information includes at least one of: type information of a sensing signal, resource configuration information of the sensing signal, or service information corresponding to the sensing signal; and
receiving, based on the sensing signal configuration information, a sensing signal sent by a sensing signal sending end.

Another aspect of embodiments of the present disclosure provides a sensing signal configuration apparatus, including:
a determining module, configured to determine sensing signal configuration information, where the sensing signal configuration information includes at least one of: type information of a sensing signal, resource configuration information of the sensing signal, or service information corresponding to the sensing signal; and
a sending module, configured to send the sensing signal configuration information to at least one of a sensing signal sending end or a sensing signal receiving end.

Another aspect of embodiments of the present disclosure provides a sensing signal configuration apparatus, including:
a receiving module, configured to receive sensing signal configuration information sent by a network side device, where the sensing signal configuration information includes at least one of: type information of a sensing signal, resource configuration information of the sensing signal, or service information corresponding to the sensing signal; and
a sending module, configured to send a sensing signal to a sensing signal receiving end based on the sensing signal configuration information.

Another aspect of embodiments of the present disclosure provides a sensing signal configuration apparatus, including:
a receiving module, configured to receive sensing signal configuration information sent by a network side device, where the sensing signal configuration information includes at least one of: type information of a sensing signal, resource configuration information of the sensing signal, or service information corresponding to the sensing signal; and
the receiving module is further configured to receive, based on the sensing signal configuration information, a sensing signal sent by a sensing signal sending end.

Another aspect of embodiments of the present disclosure provides a user equipment, including: a transceiver; a memory; and a processor coupled to the transceiver and the memory respectively, and configured to control wireless signal transceiving of the transceiver by executing a computer-executable instruction on the memory, and to implement the method provided in the embodiments of the above another aspect.

Another aspect of embodiments of the present disclosure provides a network side device, including: a transceiver; a memory; and a processor coupled to the transceiver and the memory respectively, and configured to control wireless signal transceiving of the transceiver by executing a computer-executable instruction on the memory, and to implement the method provided in the embodiments of the above another aspect.

Another aspect of embodiments of the present disclosure provides a computer storage medium, where the computer storage medium stores a computer executable instruction; and when the computer executable instruction is executed by a processor, the method described above can be implemented.

In conclusion, in the sensing signal configuration method and apparatus, the user equipment, the network side device, and the storage medium provided by the embodiments of the present disclosure, the network side device may determine sensing signal configuration information, and send the sensing signal configuration information to at least one of a sensing signal sending end or a sensing signal receiving end, so that the sensing signal sending end and the sensing signal receiving end perform receiving and sending transmission on a sensing signal based on the sensing signal configuration information. It can be learned that, in the embodiments of the present disclosure, the network side device configures and transmits a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

Additional aspects and advantages of the present disclosure will be set forth in part in the following description, which will become apparent from the following description, or understood by practice of the present disclosure.

### BRIEF DESCRIPTION OF DRAWINGS

The above and/or additional aspects and advantages of the present disclosure will become apparent and readily understood from the following description of embodiments taken with reference to the accompanying drawings.
FIG. 1 is a schematic flowchart of a sensing signal configuration method according to an embodiment of the present disclosure.
FIG. 2 is a schematic flowchart of a sensing signal configuration method according to another embodiment of the present disclosure.
FIG. 3 is a schematic flowchart of a sensing signal configuration method according to still another embodiment of the present disclosure.
FIG. 4 is a schematic flowchart of a sensing signal configuration method according to another embodiment of the present disclosure.
FIG. 5 is a schematic flowchart of a sensing signal configuration method according to another embodiment of the present disclosure.
FIG. 6 is a schematic flowchart of a sensing signal configuration method according to another embodiment of the present disclosure.
FIG. 7 is a schematic flowchart of a sensing signal configuration method according to another embodiment of the present disclosure.
FIG. 8 is a schematic flowchart of a sensing signal configuration method according to another embodiment of the present disclosure.
FIG. 9 is a schematic flowchart of a sensing signal configuration method according to another embodiment of the present disclosure.
FIG. 10 is a schematic structural diagram of a sensing signal configuration apparatus according to an embodiment of the present disclosure.
FIG. 11 is a schematic structural diagram of a sensing signal configuration apparatus according to another embodiment of the present disclosure.
FIG. 13 is a schematic structural diagram of a sensing signal configuration apparatus according to another embodiment of the present disclosure.

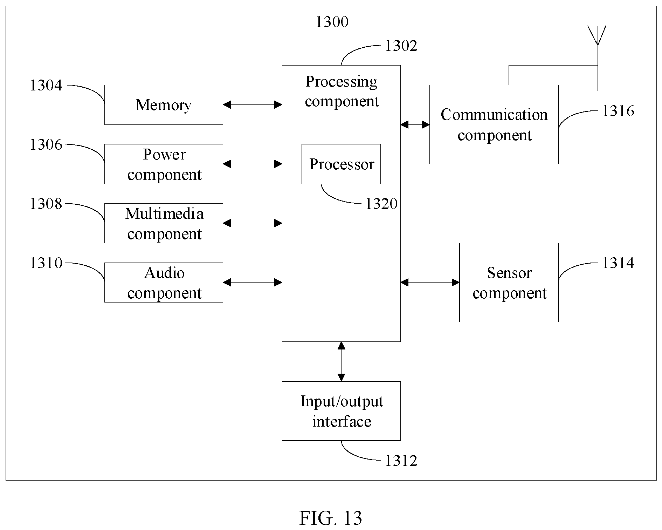

FIG. 13 is a block diagram of a user equipment according to an embodiment of the present disclosure.

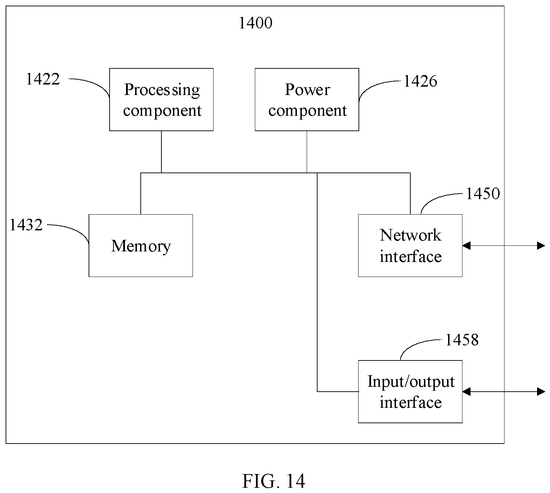

FIG. 14 is a block diagram of a base station according to an embodiment of the present disclosure.

### DETAILED DESCRIPTION

Description will now be made in detail to illustrative embodiments, examples of which are shown in the accompanying drawings. When the following description refers to the drawings, unless otherwise indicated, same reference numerals in different drawings indicate the same or similar elements. The implementations described in the following exemplary embodiments do not represent all implementations consistent with the embodiments of the present disclosure. Rather, they are merely examples of devices and methods consistent with some aspects of embodiments of the present disclosure as detailed in the appended claims.

The terminology used in the embodiments of the present disclosure is merely for the purpose of describing specific embodiments, and is not intended to limit the embodiments of the present disclosure. The singular forms "a" and "the" used in the embodiments of the present disclosure and the appended claims are also intended to include plural forms unless the context clearly indicates other meanings. It should also be understood that the term "and/or" as used herein refers to and includes any or all possible combinations of one or more associated listed items.

It should be understood that although the terms first, second, third, etc., may be used to describe various information in the embodiments of the present disclosure, these information should not be limited to these terms. These terms are only used to distinguish a same type of information from each other. For example, without departing from the scope of the embodiments of the present disclosure, first information may also be referred to as second information, and similarly, second information may also be referred to as first information. Depending on context, the words "if' and "when" as used herein may be interpreted as "in response to" or "upon" or "in response to determining".

Embodiments of the present disclosure are described in detail below, examples of which are shown in the accompanying drawings, where the same or similar reference numerals denote the same or similar elements throughout. The embodiments described below with reference to the accompanying drawings are exemplary and are intended to explain the present disclosure, and cannot be construed as limiting the present disclosure.

In a sensing signal configuration method provided by embodiments of the present disclosure, a network side device may determine sensing signal configuration information, and send the sensing signal configuration information to at least one of a sensing signal sending end or a sensing signal receiving end, so that the sensing signal sending end and the sensing signal receiving end perform receiving and sending transmission on sensing signals based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

The sensing signal configuration method and apparatus, the user equipment, the network side device and the storage medium provided by the present disclosure will be described in detail below with reference to the accompanying drawings.

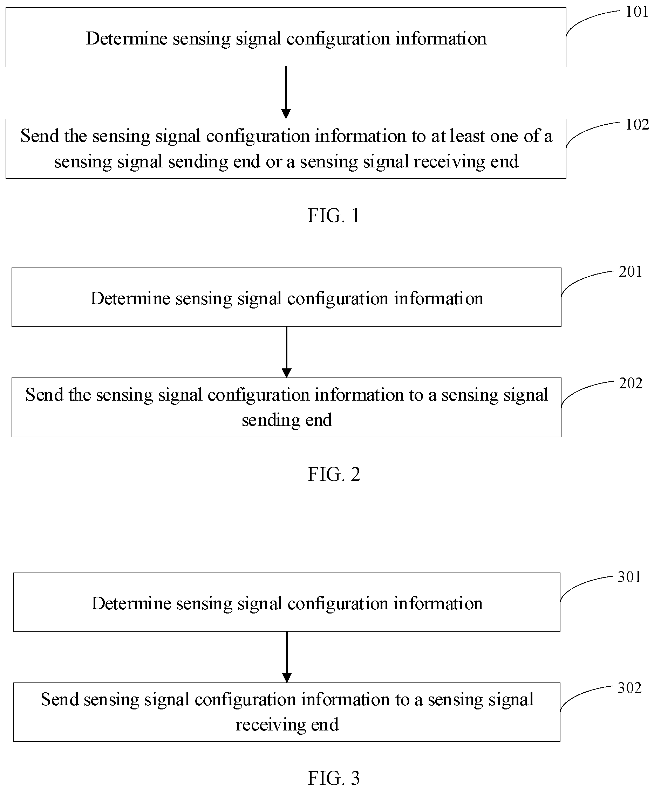

FIG. 1 is a schematic flowchart of a sensing signal configuration method provided by an embodiment of the present disclosure, which is performed by a network side device. As shown in FIG. 1, the sensing signal configuration method may include following steps.

Step 101: determining sensing signal configuration information.

It should be noted that, in an embodiment of the present disclosure, the network side device may include any one of:
a base station;
a wireless access point; or
a core network entity.

In an embodiment of the present disclosure, the wireless access point may be an access point (AP) ofWiFi.

In an embodiment of the present disclosure, the core network entity may include any one of:
an AMF (Access and Mobility Management Function);
a UPF (User Plane Function);
an MME (Mobility Management Entity); or
a service gateway.

In an embodiment of the present disclosure, the sensing signal configuration information may include at least one of: type information of a sensing signal, resource configuration information of the sensing signal, and service information corresponding to the sensing signal.

Specifically, in an embodiment of the present disclosure, the type information of the sensing signal may include at least one of:
a waveform of the sensing signal; or
a signal type of the sensing signal.

In an embodiment of the present disclosure, the waveform of the sensing signal may include at least one of:
an OFDM (Orthogonal Frequency Division Multiplexing) symbol waveform;
a pulse waveform; or
a FMCW (Frequency Modulated Continuous Wave).

In addition, in an embodiment of the present disclosure, the signal type of the sensing signal may include at least one of:
an SSB (Synchronization Signal Block);
a CSI-RS (Channel State Information-Reference Signal);
an SRS (Sounding Reference Signal); or
a PRACH (Physical Random Access Channel).

Specifically, in an embodiment of the present disclosure, the resource configuration information of the sensing signal may include at least one of:
a time-domain resource configuration corresponding to the sensing signal;
a frequency-domain resource configuration corresponding to the sensing signal;
a coding resource configuration corresponding to the sensing signal; or
a spatial resource configuration corresponding to the sensing signal.

In an embodiment of the present disclosure, the time-domain resource configuration corresponding to the sensing signal may include at least one of:
a start resource position of a time-domain resource corresponding to the sensing signal;
a resource allocation period of the time-domain resource corresponding to the sensing signal; or
an available resource position in each resource allocation period of the time-domain resource corresponding to the sensing signal.

In an embodiment of the present disclosure, the start resource position of the time-domain resource may specifically be a time position where SFN (System Frame Number) = 1, or sub-frame number = 1, or slot number = 1, or OFDM number = 1.

In addition, in an embodiment of the present disclosure, the resource allocation period of the time-domain resource may be 10 ms.

Further, in an embodiment of the present disclosure, when the resource allocation period of the time-domain resource is 10 ms, the available resource position in each resource allocation period of the time-domain resource may be resources of 5 consecutive slots starting from the start resource position in each 10 ms period. In addition, in an embodiment of the present disclosure, the available resource position in each resource allocation period of the time-domain resource may be indicated by a bitmap. For example, in an embodiment of the present disclosure, when the available resource position in each resource allocation period is resources of 5 consecutive slots starting from the start resource position in each 10 ms period, the resources of the 5 slots starting from the start resource position may be indicated by using a bitmap, where a position of each bit represents 1 slot position (for example, a first bit represents slot-1).

In an embodiment of the present disclosure, the frequency-domain resource configuration corresponding to the sensing signal may include at least one of:
frequency point information (for example, ARFCN (Absolute Radio Frequency Channel Number)) corresponding to the sensing signal;
BWP (Bandwidth Part) information corresponding to the sensing signal;
PRB (Physical Resource Block) information corresponding to the sensing signal; or
bandwidth information (for example, 20MHz) corresponding to the sensing signal.

In an embodiment of the present disclosure, the PRB information corresponding to the sensing signal may include at least one of:
a start PRB identifier;
an end PRB identifier; or
a number of PRBs.

Further, in an embodiment of the present disclosure, the coding resource configuration corresponding to the sensing signal is specifically a coding mode corresponding to the sensing signal. In an embodiment of the present disclosure, the coding resource configuration corresponding to the sensing signal may be a coding identifier, and the coding identifier corresponds to a coding mode. For example, in an embodiment of the present disclosure, the coding resource configuration corresponding to the sensing signal may be a cyclic shift identifier of a demodulation reference signal (DMRS). In another embodiment of the present disclosure, the coding resource configuration corresponding to the sensing signal may be a preamble identifier of a PRACH (Physical Random Access Channel).

Further, in an embodiment of the present disclosure, the spatial resource configuration corresponding to the sensing signal may include at least one of:
a spatial resource identifier corresponding to the sensing signal; or
a corresponding relationship between the spatial resource identifier and the sensing signal.

Specifically, in an embodiment of the present disclosure, the spatial resource identifier corresponding to the sensing signal may include at least one of:
a TCI (Transmission Configuration Indicator) identifier;
an SSB identifier;
a CSI-RS identifier; or
an SRS identifier.

In addition, in an embodiment of the present disclosure, the corresponding relationship between the spatial resource identifier and the sensing signal (for example, the corresponding relationship between the spatial resource identifier and the signal type of the sensing signal) may be used to: after the spatial resource identifier is determined, determine the signal type of the corresponding sensing signal based on the spatial resource identifier.

Specifically, in an embodiment of the present disclosure, when the determined spatial resource identifier is a spatial resource identifier having a quasi co-location (QCL) relationship with the SRS sensing signal, the signal type of the sensing signal corresponding to the spatial resource identifier may be an SRS.

In addition, in another embodiment of the present disclosure, the corresponding relationship between the spatial resource identifier and the sensing signal may be that the SSB identifier corresponds to the PRACH sensing signal, or the CSI-RS identifier corresponds to the PRACH sensing signal.

In an embodiment of the present disclosure, the service information corresponding to the sensing signal may include at least one of:
information of a sensed target;
service identifier information of a service corresponding to the sensing signal;
bearer information corresponding to the sensing signal, where the bearer information is bearer information corresponding to the service corresponding to the sensing signal;
service type information of the service corresponding to the sensing signal; or
a sensing requirement of the service corresponding to the sensing signal.

Specifically, in an embodiment of the present disclosure, the information of the sensed target may include at least one of:
a region position of the sensed target;
a type of the sensed target (e.g., building; human body; human face; car); or
an identifier of the sensed target.

In an embodiment of the present disclosure, the region position information of the sensed target may be a specific range. For example, in an embodiment of the present disclosure, the region position information of the sensed target may be a horizontal coordinate range [xl, x2] in a horizontal plane, a vertical coordinate range [y1, y2] in the horizontal plane, and a coordinate range [z1, z2] in a vertical plane, with the sensing signal receiving end as an origin.

In another embodiment of the present disclosure, the region position information of the sensed target may be a distance range [d1, d2] between the sensed target and the sensing signal receiving end, and direction angle information of the sensed target relative to the sensing signal receiving end.

In another embodiment of the present disclosure, the region position information of the sensed target may be a sensed region determined according to at least one of a longitude range, a latitude range, or an altitude range.

In addition, in an embodiment of the present disclosure, the bearer information corresponding to the sensing signal may include at least one of:
a session identifier (for example, a PDU session ID) corresponding to the sensing signal;
a service flow identifier (for example, a QoS flow ID) corresponding to the sensing signal;
a radio bearer identifier (for example, a DRB (Data Radio Bearer) ID) corresponding to the sensing signal; or
a logical channel identifier (for example, Logical Channel ID) corresponding to the sensing signal.

Further, in an embodiment of the present disclosure, the service type information of the service corresponding to the sensing signal may include at least one of:
weather forecast sensing (e.g., rain, snow);
traffic congestion sensing (e.g., accidents);
pulse sensing;
3D (Three-dimensional) imaging sensing; or
AR (Augmented Reality) game sensing.

Further, in an embodiment of the present disclosure, the sensing requirement of the service corresponding to the sensing signal may include at least one of:
sensing a distance (for example, 100 m) between the sensing signal receiving end and the sensed target;
accuracy of the sensed distance (e.g., accuracy of +/- 5 cm);
sensing a range of angles between the sensing signal receiving end and the sensed target (for example, a horizontal angle range is 0 degrees to 60 degrees, and/or a vertical angle range is 0 degrees to 40 degrees);
accuracy of the sensed angle (for example, a minimum angle that can distinguish a reflector is 1 degree);
sensing a maximum speed of the sensed target (e.g., the maximum is 100 Km/h); or
accuracy of the sensed speed (e.g., sensed speed accuracy is +/- 5 m/h).

Step 102: sending the sensing signal configuration information to at least one of a sensing signal sending end or a sensing signal receiving end.

Specifically, in an embodiment of the present disclosure, the sensing signal sending end may include any one of:
a base station;
a wireless access point; or
a user equipment (UE).

In another embodiment of the present disclosure, the sensing signal receiving end may include any one of:
a base station;
a wireless access point; or
a UE.

It should be noted that the UE may be a device that provides voice and/or data connectivity to the user. The UE may communicate with one or more core networks through a radio access network (RAN), and the UE may be an Internet of Things terminal, such as a sensor device, a mobile phone (or referred to as a "cellular" phone), and a computer having the Internet of Things terminal, for example, may be a fixed, portable, pocket, hand-held, computer built-in, or vehicle-mounted apparatus. For example, a station (STA), a subscriber unit, a subscriber station, a mobile station, a mobile, a remote station, an access point, a remote terminal, an access terminal, a user terminal, or a user agent. Alternatively, the UE may be a device of an unmanned aerial vehicle. Alternatively, the UE may be a vehicle-mounted device, for example, a vehicle computer having a wireless communication function, or a wireless terminal externally connected to a vehicle computer. Alternatively, the UE may be a roadside device, for example, a street lamp, a signal light, or another roadside device having a wireless communication function.

In addition, in an embodiment of the present disclosure, the sensing signal sending end, the sensing signal receiving end and the network side device may be different devices.

In another embodiment of the present disclosure, the sensing signal sending end may be a same device as the sensing signal receiving end, and may be a different device from the network side device.

In another embodiment of the present disclosure, the sensing signal sending end may be a same device as the network side device, and may be a different device from the sensing signal receiving end.

In another embodiment of the present disclosure, the sensing signal receiving end may be a same device as the network side device, and may be a different device from the sensing signal sending end.

In another embodiment of the present disclosure, the sensing signal sending end, the sensing signal receiving end and the network side device may be a same device.

As described above, in a sensing signal configuration method provided by embodiments of the present disclosure, a network side device may determine sensing signal configuration information, and send the sensing signal configuration information to at least one of a sensing signal sending end or a sensing signal receiving end, so that the sensing signal sending end and the sensing signal receiving end perform receiving and sending transmission on sensing signals based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

FIG. 2 is a schematic flowchart of a sensing signal configuration method provided by another embodiment of the present disclosure, which is performed by a network side device. As shown in FIG. 2, the sensing signal configuration method may include following steps.

Step 201: determining sensing signal configuration information.

Step 202: sending the sensing signal configuration information to a sensing signal sending end.

In an embodiment of the present disclosure, when the network side device and a sensing signal receiving end are a same device, the network side device may not need to send the sensing signal configuration information to the sensing signal receiving end, and only need to send the sensing signal configuration information to the sensing signal sending end.

Detailed descriptions of steps 201 to 202 may be referred to from related descriptions in the above embodiments, which will not be repeated here in the embodiment of the present disclosure.

As described above, in a sensing signal configuration method provided by embodiments of the present disclosure, a network side device may determine sensing signal configuration information, and send the sensing signal configuration information to at least one of a sensing signal sending end or a sensing signal receiving end, so that the sensing signal sending end and the sensing signal receiving end perform receiving and sending transmission on sensing signals based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

FIG. 3 is a schematic flowchart of a sensing signal configuration method provided by another embodiment of the present disclosure, which is performed by a network side device. As shown in FIG. 3, the sensing signal configuration method may include following steps.

Step 301: determining sensing signal configuration information.

Step 302: sending sensing signal configuration information to a sensing signal receiving end.

In an embodiment of the present disclosure, when the network side device and a sensing signal sending end are a same device, the network side device may not need to send the sensing signal configuration information to the sensing signal sending end, and only need to send the sensing signal configuration information to the sensing signal receiving end.

Detailed descriptions of steps 301 to 302 may be referred to from related descriptions in the above embodiments, which will not be repeated here in the embodiment of the present disclosure.

As described above, in a sensing signal configuration method provided by embodiments of the present disclosure, a network side device may determine sensing signal configuration information, and send the sensing signal configuration information to at least one of a sensing signal sending end or a sensing signal receiving end, so that the sensing signal sending end and the sensing signal receiving end perform receiving and sending transmission on sensing signals based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

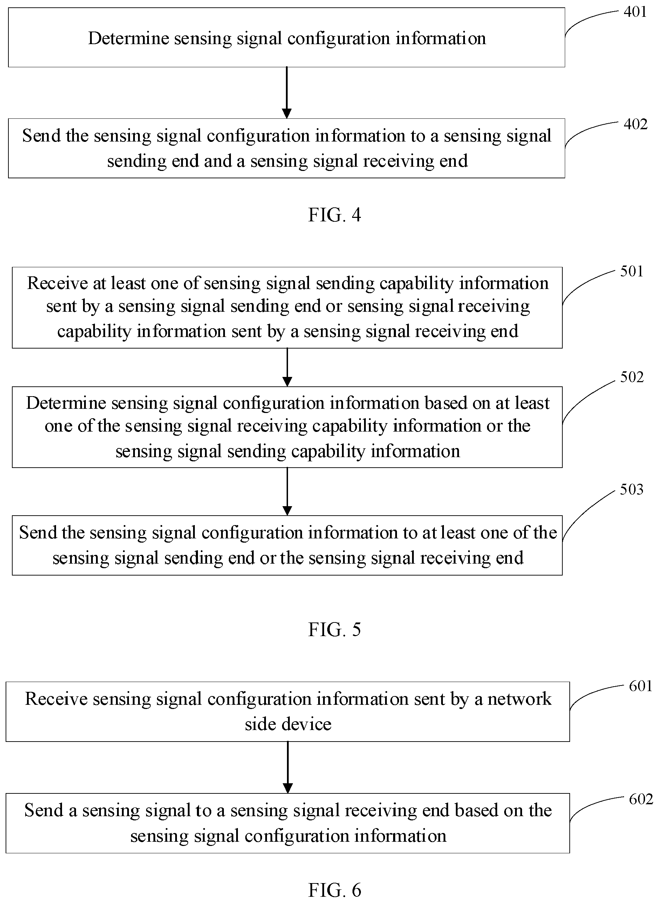

FIG. 4 is a schematic flowchart of a sensing signal configuration method provided by another embodiment of the present disclosure, which is performed by a network side device. As shown in FIG. 4, the sensing signal configuration method may include following steps.

Step 401: determining sensing signal configuration information.

Step 402: sending the sensing signal configuration information to a sensing signal sending end and a sensing signal receiving end.

In an embodiment of the present disclosure, when the sensing signal sending end, the sensing signal receiving end and the network side device are different devices, the network side device needs to send the sensing signal configuration information to both the sensing signal sending end and the sensing signal receiving end.

Detailed descriptions of steps 401 to 402 may be referred to from related descriptions in the above embodiments, which will not be repeated here in the embodiment of the present disclosure.

As described above, in a sensing signal configuration method provided by embodiments of the present disclosure, a network side device may determine sensing signal configuration information, and send the sensing signal configuration information to at least one of a sensing signal sending end or a sensing signal receiving end, so that the sensing signal sending end and the sensing signal receiving end perform receiving and sending transmission on sensing signals based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

FIG. 5 is a schematic flowchart of a sensing signal configuration method provided by another embodiment of the present disclosure, which is performed by a network side device. As shown in FIG. 5, the sensing signal configuration method may include following steps.

Step 501: receiving at least one of sensing signal sending capability information sent by a sensing signal sending end or sensing signal receiving capability information sent by a sensing signal receiving end.

Descriptions of device types of the sensing signal sending end and the sensing signal receiving end can be referred to from related descriptions in the above embodiments, and details will not be repeated here in the embodiments of the present disclosure.

Further, in an embodiment of the present disclosure, the sensing signal sending capability information may include at least one of:
a signal type of a sensing signal sendable by the sensing signal sending end;
a sensing manner supported by the sensing signal sending end; or
a receiving and sending mode of the sensing signal.

In an embodiment of the present disclosure, specific description of the signal type of the sensing signal may be referred to from related description of the signal type of the sensing signal in the above embodiments.

In addition, in an embodiment of the present disclosure, the sensing manner supported by the sensing signal sending end may include at least one of:
TOF (Time of Flight) sensing; or
PAC (Phase and Amplitude Change) sensing.

Specifically, in an embodiment of the present disclosure, the TOF sensing may include that the sensing signal receiving end senses according to at least one of a transmission time, a transmission angle or an arrival angle of the sensing signal. For example, in an embodiment of the present disclosure, the TOF sensing may mainly include: acquiring, by a sensing signal receiving end, at least one of coordinates of a reflector or speed information in a flight process of the sensing signal according to flight characteristics of the sensing signal.

In addition, in an embodiment of the present disclosure, the PAC sensing may include: sensing according to historical change information of at least one of phase or amplitude of a reflected signal. For example, in an embodiment of the present disclosure, the PAC sensing may mainly include: matching, by a sensing signal receiving end, a phase and amplitude change feature of the sensing signal as a specific behavior pattern corresponding to a reflector.

Further, in the embodiments of the present disclosure, the receiving and sending mode of the sensing signal may include at least one of:
the sensing signal sending end is a base station, the sensing signal receiving end is a base station, and the sensing signal sending end and the sensing signal receiving end are different base stations;
the sensing signal sending end is a base station, the sensing signal receiving end is the base station, and the sensing signal sending end and the sensing signal receiving end are the same base station;
the sensing signal sending end is a wireless access point, the sensing signal receiving end is a wireless access point, and the sensing signal sending end and the sensing signal receiving end are different wireless access points;
the sensing signal sending end is a wireless access point, the sensing signal receiving end is the wireless access point, and the sensing signal sending end and the sensing signal receiving end are the same wireless access point;
the sensing signal sending end is a UE, the sensing signal receiving end is a UE, and the sensing signal sending end and the sensing signal receiving end are different UEs;
the sensing signal sending end is a UE, the sensing signal receiving end is the UE, and the sensing signal sending end and the sensing signal receiving end are the same UE;
the sensing signal sending end is a base station, and the sensing signal receiving end is a UE;
the sensing signal sending end is a UE, and the sensing signal receiving end is a base station;
the sensing signal sending end is a wireless access point, and the sensing signal receiving end is a UE; or
the sensing signal sending end is a UE, and the sensing signal receiving end is a wireless access point.

Further, in an embodiment of the present disclosure, the sensing signal receiving capability information may include at least one of:
a signal type of the sensing signal receivable by the sensing signal receiving end;
a sensing manner supported by the sensing signal receiving end; or
a receiving and sending mode of the sensing signal.

In an embodiment of the present disclosure, the sensing signal receiving capability information is similar to the sensing signal sending capability information, and reference may be made to the related description of the sensing signal sending capability information in detail, which will not be repeated here.

It should be noted that, in an embodiment of the present disclosure, the network-side device, the sensing signal sending end, and the sensing signal receiving end may be a same device. In another embodiment of the present disclosure, the network-side device, the sensing signal sending end and the sensing signal receiving end may be different devices.

In an embodiment of the present disclosure, when the sensing signal sending end is a same device as the network side device, and is a different device from the sensing signal receiving end, step 501 may include following steps:
determining the sensing signal sending capability information of the sensing signal sending end itself; and
receiving the sensing signal receiving capability information sent by the sensing signal receiving end.

In another embodiment of the present disclosure, when the sensing signal receiving end is a same device as the network side device, and is a different device from the sensing signal sending end, step 501 may include following steps:
determining the sensing signal receiving capability information of the sensing signal receiving end itself; and
receiving the sensing signal sending capability information sent by the sensing signal sending end.

In another embodiment of the present disclosure, when the sensing signal receiving end, the network side device and the sensing signal sending end are different devices, step 501 may include following steps:
receiving the sensing signal receiving capability information sent by the sensing signal receiving end; and
receiving the sensing signal sending capability information sent by the sensing signal sending end.

In another embodiment of the present disclosure, when the sensing signal receiving end, the network side device and the sensing signal sending end are a same device, step 501 may include following steps:
determining capability information of itself (the capability information corresponds to the sensing signal receiving capability information and the sensing signal sending capability information).

Step 502: determining sensing signal configuration information based on at least one of the sensing signal receiving capability information or the sensing signal sending capability information.

In an embodiment of the present disclosure, for detailed description of the sensing signal configuration information, reference may be made to related description in the above embodiments, and details are not repeated here in the embodiment of the present disclosure.

Step 503: sending the sensing signal configuration information to at least one of the sensing signal sending end or the sensing signal receiving end.

Detailed descriptions of step 503 may be referred to from related description in the above embodiments, which will not be repeated here in the embodiment of the present disclosure.

As described above, in a sensing signal configuration method provided by embodiments of the present disclosure, a network side device may determine sensing signal configuration information, and send the sensing signal configuration information to at least one of a sensing signal sending end or a sensing signal receiving end, so that the sensing signal sending end and the sensing signal receiving end perform receiving and sending transmission on sensing signals based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

FIG. 6 is a schematic flowchart of a sensing signal configuration method provided by another embodiment of the present disclosure, which is performed by a sensing signal sending end. As shown in FIG. 6, the sensing signal configuration method may include following steps.

Step 601: receiving sensing signal configuration information sent by a network side device.

In an embodiment of the present disclosure, the sensing signal configuration information may include at least one of: type information of a sensing signal, resource configuration information of the sensing signal, and service information corresponding to the sensing signal.

Further, in an embodiment of the present disclosure, for detailed description of the network side device and the sensing signal configuration information, reference may be made to related description in the above embodiments, and details are not repeated here in the embodiment of the present disclosure.

In addition, in an embodiment of the present disclosure, the sensing signal sending end and the network side device may be a same device. In another embodiment of the present disclosure, the sensing signal sending end and the network side device may be different devices.

Specifically, in an embodiment of the present disclosure, when the sensing signal sending end and the network side device are the same device, step 601 includes: directly determining the sensing signal configuration information of the sensing signal sending end, without receiving the sensing signal configuration information sent by the network side device.

Step 602: sending a sensing signal to a sensing signal receiving end based on the sensing signal configuration information.

As described above, in the sensing signal configuration method provided by the embodiment of the present disclosure, the sensing signal sending end may receive the sensing signal configuration information sent by the network side device, and send a sensing signal to the sensing signal receiving end based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

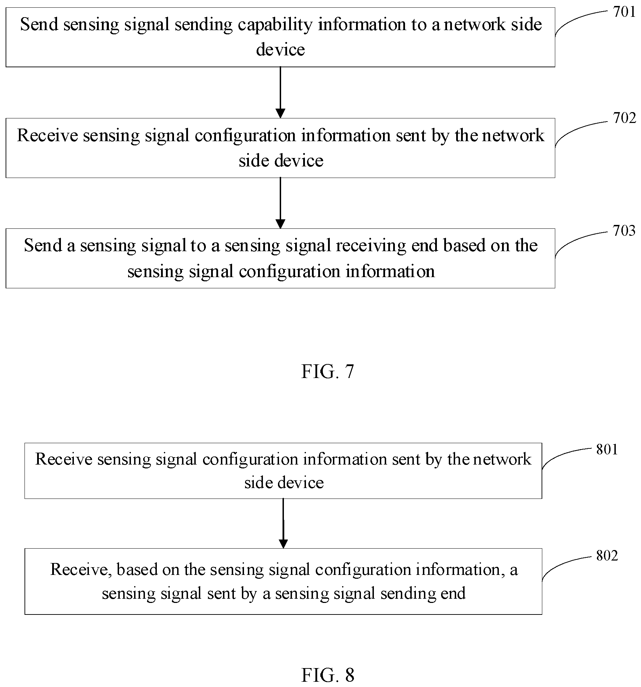

FIG. 7 is a schematic flowchart of a sensing signal configuration method provided by another embodiment of the present disclosure, which is performed by a sensing signal sending end. As shown in FIG. 7, the sensing signal configuration method may include following steps.

Step 701: sending sensing signal sending capability information to a network side device.

In an embodiment of the present disclosure, for detailed description of the network side device and the sensing signal sending capability information, reference may be made to related description in the above embodiments, and details are not repeated here in the embodiment of the present disclosure.

In addition, in an embodiment of the present disclosure, the sensing signal sending end and the network side device may be a same device. In another embodiment of the present disclosure, the sensing signal sending end and the network side device may be different devices.

Specifically, in an embodiment of the present disclosure, when the sensing signal sending end and the network side device are a same device, step 701 includes: directly determining the sensing signal sending capability information, without sending the sensing signal sending capability information to the network side device.

Step 702: receiving sensing signal configuration information sent by the network side device.

Step 703: sending a sensing signal to a sensing signal receiving end based on the sensing signal configuration information.

In an embodiment of the present disclosure, for detailed descriptions of steps 702 to 703, reference may be made to related descriptions in the above embodiments, and details are not repeated here.

As described above, in the sensing signal configuration method provided by the embodiment of the present disclosure, the sensing signal sending end may receive the sensing signal configuration information sent by the network side device, and send a sensing signal to the sensing signal receiving end based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

FIG. 8 is a schematic flowchart of a sensing signal configuration method provided by another embodiment of the present disclosure, which is performed by a sensing signal receiving end. As shown in FIG. 8, the sensing signal configuration method may include following steps.

Step 801: receiving sensing signal configuration information sent by the network side device.

In an embodiment of the present disclosure, the sensing signal configuration information may include at least one of: type information of a sensing signal, resource configuration information of the sensing signal, and service information corresponding to the sensing signal.

Further, in an embodiment of the present disclosure, for detailed description of the network side device and the sensing signal configuration information, reference may be made to related description in the above embodiments, and details are not repeated here in the embodiment of the present disclosure.

In addition, in an embodiment of the present disclosure, the sensing signal receiving end and the network side device may be a same device. In another embodiment of the present disclosure, the sensing signal receiving end and the network side device may be different devices.

Specifically, in an embodiment of the present disclosure, when the sensing signal receiving end and the network side device are the same device, step 801 includes: directly determining the sensing signal configuration information of the sensing signal receiving end, without receiving the sensing signal configuration information sent by the network side device.

Step 802: receiving, based on the sensing signal configuration information, a sensing signal sent by a sensing signal sending end.

In an embodiment of the present disclosure, after receiving a sensing signal sent by a sensing signal sending end, a sensing signal receiving end may sense the sensing signal to determine related information of a reflector that blocks the sensing signal in a sensing signal transmission process, thereby implementing motion detection, gesture recognition, biometric measurement, and the like based on the related information of the reflector.

In an embodiment of the present disclosure, the related information of the reflector may include at least one of:
coordinate information of the reflector (for example, coordinates (such as a distance, a horizontal angle, and a vertical angle) of the reflector relative to the sensing signal receiving end);
speed information of the reflector (for example, a moving speed and a moving direction of the reflector relative to the sensing signal receiving end); or
behavior pattern information of the reflector (for example, motion information such as running, walking, approaching, falling, swinging, etc.; or weather information (such as rain, snow, etc.), or traffic information (such as congestion, accidents, etc.)).

As described above, in the sensing signal configuration method provided by the embodiment of the present disclosure, the sensing signal receiving end may receive the sensing signal configuration information sent by the network side device, and receive a sensing signal sent by a sensing signal sending end based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

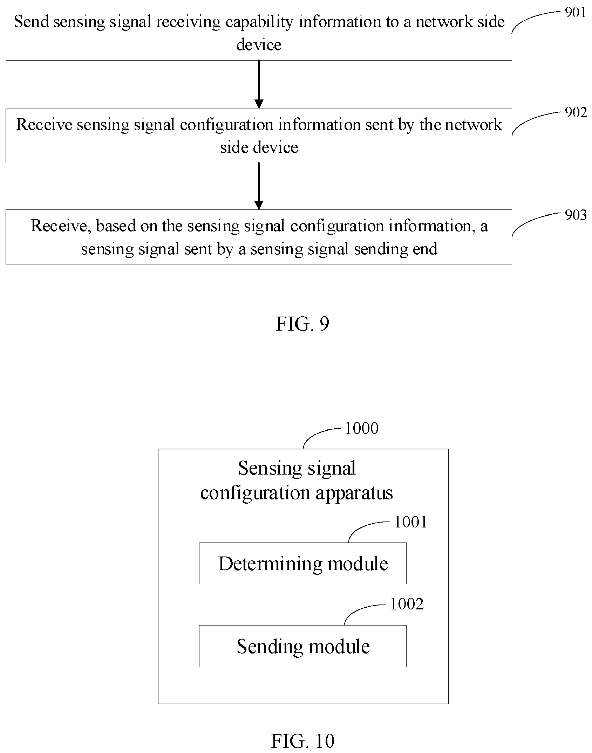

FIG. 9 is a schematic flowchart of a sensing signal configuration method provided by another embodiment of the present disclosure, which is performed by a sensing signal receiving end. As shown in FIG. 9, the sensing signal configuration method may include following steps.

Step 901: sending sensing signal receiving capability information to a network side device.

In an embodiment of the present disclosure, for detailed description of the network side device and the sensing signal receiving capability information, reference may be made to related description in the above embodiments, and details are not repeated here in the embodiment of the present disclosure.

In addition, in an embodiment of the present disclosure, the network side device and the sensing signal receiving end may be a same device. In another embodiment of the present disclosure, the network side device and the sensing signal receiving end may be different devices.

Specifically, in an embodiment of the present disclosure, when the sensing signal receiving end and the network side device are a same device, step 901 includes: directly determining the sensing signal receiving capability information, without sending the sensing signal receiving capability information to the network side device.

Step 902: receiving sensing signal configuration information sent by the network side device.

Step 903: receiving, based on the sensing signal configuration information, a sensing signal sent by a sensing signal sending end.

For detailed descriptions of steps 902 to 903, refer to related descriptions in the foregoing embodiments, and details are not described herein in this embodiment of the present disclosure.

As described above, in the sensing signal configuration method provided by the embodiment of the present disclosure, the sensing signal receiving end may receive the sensing signal configuration information sent by the network side device, and receive a sensing signal sent by a sensing signal sending end based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

In addition, it shall be noted that, in an embodiment of the present disclosure, capability information may also be sent between the sensing signal sending end and the sensing signal receiving end. That is, in an embodiment of the present disclosure, the sensing signal sending end may send the sensing signal sending capability information to the sensing signal receiving end. In another embodiment of the present disclosure, the sensing signal receiving end may send the sensing signal receiving capability information to the sensing signal sending end.

FIG. 10 is a schematic structural diagram of a sensing signal configuration apparatus according to an embodiment of the present disclosure. As shown in FIG. 10, the apparatus 1000 may include:
a determining module 1001, configured to determine sensing signal configuration information, where the sensing signal configuration information includes at least one of: type information of a sensing signal, resource configuration information of the sensing signal, or service information corresponding to the sensing signal; and
a sending module 1002, configured to send the sensing signal configuration information to at least one of a sensing signal sending end or a sensing signal receiving end.

As described above, in a sensing signal configuration apparatus provided by embodiments of the present disclosure, a network side device may determine sensing signal configuration information, and send the sensing signal configuration information to at least one of a sensing signal sending end or a sensing signal receiving end, so that the sensing signal sending end and the sensing signal receiving end perform receiving and sending transmission on sensing signals based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

In an embodiment of the present disclosure, the network side device includes any one of:
a base station;
a wireless access point; or
a core network entity.

Further, in another embodiment of the present disclosure, the core network entity includes any one of:
an access and mobility management function (AMF);
a user plane function (UPF);
a mobility management entity (MME); or
a service gateway.

Further, in another embodiment of the present disclosure, the type information of the sensing signal includes at least one of:
a waveform of the sensing signal; or
a signal type of the sensing signal.

Further, in another embodiment of the present disclosure, the waveform of the sensing signal includes at least one of:
an OFDM symbol waveform;
a pulse waveform; or
a FMCW.

Further, in another embodiment of the present disclosure, the signal type of the sensing signal includes at least one of:
an SSB;
a CSI-RS;
an SRS; or
a PRACH.

Further, in another embodiment of the present disclosure, the resource configuration information of the sensing signal includes at least one of:
a time-domain resource configuration corresponding to the sensing signal;
a frequency-domain resource configuration corresponding to the sensing signal;
a coding resource configuration corresponding to the sensing signal; or
a spatial resource configuration corresponding to the sensing signal.

Further, in another embodiment of the present disclosure, the time-domain resource configuration corresponding to the sensing signal includes at least one of:
a start resource position of a time-domain resource;
a resource allocation period of the time-domain resource; or
an available resource position in each resource allocation period of the time-domain resource.

Further, in another embodiment of the present disclosure, the frequency-domain resource configuration corresponding to the sensing signal includes at least one of:
frequency point information corresponding to the sensing signal;
BWP information corresponding to the sensing signal;
PRB information corresponding to the sensing signal; or
bandwidth information corresponding to the sensing signal.

Further, in another embodiment of the present disclosure, the PRB information corresponding to the sensing signal includes at least one of:
a start PRB identifier;
an end PRB identifier; or
a number of PRBs.

Further, in an embodiment of the present disclosure, the spatial resource configuration corresponding to the sensing signal includes at least one of:
a spatial resource identifier corresponding to the sensing signal; or
a corresponding relationship between the spatial resource identifier and the sensing signal.

Further, in another embodiment of the present disclosure, the spatial resource identifier corresponding to the sensing signal includes at least one of:
a TCI identifier;
an SSB identifier;
a CSI-RS identifier; or
an SRS identifier.

Further, in another embodiment of the present disclosure, the service information corresponding to the sensing signal includes at least one of:
information of a sensed target;
service identifier information of a service corresponding to the sensing signal;
bearer information corresponding to the sensing signal, where the bearer information is bearer information corresponding to the service corresponding to the sensing signal;
service type information of the service corresponding to the sensing signal; or
a sensing requirement of the service corresponding to the sensing signal.

Further, in another embodiment of the present disclosure, the information of the sensed target includes at least one of:
a region position of the sensed target;
a type of sensed target; or
an identifier of the sensed target.

Further, in another embodiment of the present disclosure, the bearer information corresponding to the sensing signal includes at least one of:
a session identifier corresponding to the sensing signal;
a service flow identifier corresponding to the sensing signal;
a radio bearer identifier corresponding to the sensing signal; or
a logical channel identifier corresponding to the sensing signal.

Further, in another embodiment of the present disclosure, the service type information of the service corresponding to the sensing signal includes at least one of:
weather forecast sensing;
traffic congestion sensing;
pulse sensing;
three-dimensional (3D) imaging sensing; or
augmented reality (AR) game sensing.

Further, in another embodiment of the present disclosure, the sensing requirement of the service corresponding to the sensing signal includes at least one of:
sensing a distance from the sensed target;
accuracy of the sensed distance;
sensing a range of angles with the sensed target;
accuracy of the sensed angle;
sensing a maximum speed of the sensed target; or
accuracy of the sensed speed.

Further, in another embodiment of the present disclosure, the sensing signal sending end, the sensing signal receiving end and the network side device are different devices.

Further, in another embodiment of the present disclosure, the apparatus is further configured to:
receive sensing signal sending capability information sent by the sensing signal sending end, and sense signal receiving capability information sent by the sensing signal receiving end.

Further, in another embodiment of the present disclosure, the sensing signal sending end is a same device as the network side device, and is a different device from the sensing signal receiving end.

Further, in another embodiment of the present disclosure, the apparatus is further configured to:
determine sensing signal sending capability information of the sensing signal sending end; and
receive the sensing signal receiving capability information sent by the sensing signal receiving end.

Further, in another embodiment of the present disclosure, the sensing signal receiving end is a same device as the network side device, and is a different device from the sensing signal sending end.

Further, in another embodiment of the present disclosure, the apparatus is further configured to:
determine sensing signal receiving capability information of the sensing signal receiving end; and
receive the sensing signal sending capability information sent by the sensing signal sending end.

Further, in another embodiment of the present disclosure, the determining module 1001 is further configured to:
determine sensing signal configuration information based on at least one of the sensing signal receiving capability information or the sensing signal sending capability information.

Further, in another embodiment of the present disclosure, the sensing signal sending capability information includes at least one of:
a signal type of a sensing signal sendable by the sensing signal sending end;
a sensing manner supported by the sensing signal sending end; or
a receiving and sending mode of the sensing signal.

Further, in another embodiment of the present disclosure, the sensing signal receiving capability information includes at least one of:
a signal type of the sensing signal receivable by the sensing signal receiving end;
a sensing manner supported by the sensing signal receiving end; or
a receiving and sending mode of the sensing signal.

Further, in another embodiment of the present disclosure, the sensing signal receiving capability information includes at least one of:
a signal type of the sensing signal receivable by the sensing signal receiving end;
a sensing manner supported by the sensing signal receiving end; or
a receiving and sending mode of the sensing signal.

Further, in another embodiment of the present disclosure, the sensing manner includes at least one of:
TOF sensing; or
PAC sensing.

Further, in another embodiment of the present disclosure, the receiving and sending mode of the sensing signal includes at least one of:
the sensing signal sending end is a base station, the sensing signal receiving end is a base station, and the sensing signal sending end and the sensing signal receiving end are different base stations;
the sensing signal sending end is a base station, the sensing signal receiving end is the base station, and the sensing signal sending end and the sensing signal receiving end are the same base station;
the sensing signal sending end is a wireless access point, the sensing signal receiving end is a wireless access point, and the sensing signal sending end and the sensing signal receiving end are different wireless access points;
the sensing signal sending end is a wireless access point, the sensing signal receiving end is the wireless access point, and the sensing signal sending end and the sensing signal receiving end are the same wireless access point;
the sensing signal sending end is a user equipment UE, the sensing signal receiving end is a UE, and the sensing signal sending end and the sensing signal receiving end are different UEs.
the sensing signal sending end is a UE, the sensing signal receiving end is the UE, and the sensing signal sending end and the sensing signal receiving end are the same UE;
the sensing signal sending end is a base station, and the sensing signal receiving end is a UE;
the sensing signal sending end is a UE, and the sensing signal receiving end is a base station;
the sensing signal sending end is a wireless access point, and the sensing signal receiving end is a UE; or
the sensing signal sending end is a UE, and the sensing signal receiving end is a wireless access point.

Further, in another embodiment of the present disclosure, the sensing signal sending end and the sensing signal sending end are a same device.

Further, in another embodiment of the present disclosure, the sensing signal sending end and the sensing signal sending end are different devices.

Further, in another embodiment of the present disclosure, the sensing signal sending end includes any one of:
a base station;
a wireless access point; or
a UE.

Further, in another embodiment of the present disclosure, the sensing signal receiving end includes any one of:
a base station;
a wireless access point; or
a UE.

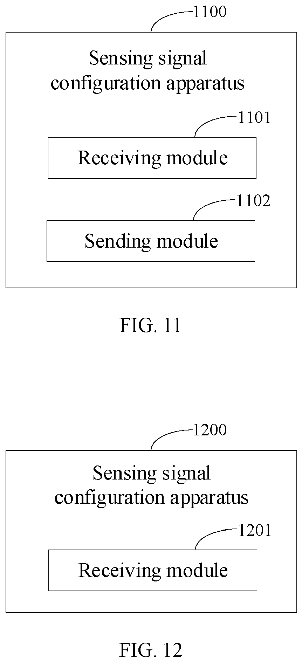

FIG. 11 is a schematic structural diagram of a sensing signal configuration apparatus according to another embodiment of the present disclosure. As shown in FIG. 11, the apparatus 1100 may include:
a receiving module 1101, configured to receive sensing signal configuration information sent by a network side device, where the sensing signal configuration information includes at least one of: type information of a sensing signal, resource configuration information of the sensing signal, or service information corresponding to the sensing signal; and
a sending module 1102, configured to send a sensing signal to a sensing signal receiving end based on the sensing signal configuration information.

As described above, in the sensing signal configuration apparatus provided by the embodiment of the present disclosure, the sensing signal sending end may receive the sensing signal configuration information sent by the network side device, and send a sensing signal to the sensing signal receiving end based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

In an embodiment of the present disclosure, the network side device includes any one of:
a base station;
a wireless access point; or
a core network entity.

Further, in another embodiment of the present disclosure, the core network entity includes any one of:
an AMF;
a UPF;
an MME; or
a service gateway.

Further, in another embodiment of the present disclosure, the type information of the sensing signal includes at least one of:
a waveform of the sensing signal; or
a signal type of the sensing signal.

Further, in another embodiment of the present disclosure, the waveform of the sensing signal includes at least one of:
an OFDM symbol waveform;
a pulse waveform; or
a FMCW.

Further, in another embodiment of the present disclosure, the signal type of the sensing signal includes at least one of:
an SSB;
a CSI-RS;
an SRS; or
a PRACH.

Further, in another embodiment of the present disclosure, the resource configuration information of the sensing signal includes at least one of:
a time-domain resource configuration corresponding to the sensing signal;
a frequency-domain resource configuration corresponding to the sensing signal;
a coding resource configuration corresponding to the sensing signal; or
a spatial resource configuration corresponding to the sensing signal.

Further, in another embodiment of the present disclosure, the time-domain resource configuration corresponding to the sensing signal includes at least one of:
a start resource position of a time-domain resource;
a resource allocation period of the time-domain resource; or
an available resource position in each resource allocation period of the time-domain resource.

Further, in another embodiment of the present disclosure, the frequency-domain resource configuration corresponding to the sensing signal includes at least one of:
frequency point information corresponding to the sensing signal;
BWP information corresponding to the sensing signal;
PRB information corresponding to the sensing signal; or
bandwidth information corresponding to the sensing signal.

Further, in another embodiment of the present disclosure, the PRB information corresponding to the sensing signal includes at least one of:
a start PRB identifier;
an end PRB identifier; or
a number of PRBs.

Further, in another embodiment of the present disclosure, the spatial resource configuration corresponding to the sensing signal includes at least one of:
a spatial resource identifier corresponding to the sensing signal; or
a corresponding relationship between the spatial resource identifier and the sensing signal.

Further, in another embodiment of the present disclosure, the spatial resource identifier corresponding to the sensing signal includes at least one of:
a TCI identifier;
an SSB identifier;
a CSI-RS identifier; or
an SRS identifier.

Further, in another embodiment of the present disclosure, the service information corresponding to the sensing signal includes at least one of:
information of a sensed target;
service identifier information of a service corresponding to the sensing signal;
bearer information corresponding to the sensing signal, where the bearer information is bearer information corresponding to the service corresponding to the sensing signal;
service type information of the service corresponding to the sensing signal; or
a sensing requirement of the service corresponding to the sensing signal.

Further, in another embodiment of the present disclosure, the information of the sensed target includes at least one of:
a region position of the sensed target;
a type of sensed target; or
an identifier of the sensed target.

Further, in another embodiment of the present disclosure, the bearer information corresponding to the sensing signal includes at least one of:
a session identifier corresponding to the sensing signal;
a service flow identifier corresponding to the sensing signal;
a radio bearer identifier corresponding to the sensing signal; or
a logical channel identifier corresponding to the sensing signal.

Further, in another embodiment of the present disclosure, the service type information of the service corresponding to the sensing signal includes at least one of:
weather forecast sensing;
traffic congestion sensing;
pulse sensing;
3D imaging sensing; or
AR game sensing.

Further, in another embodiment of the present disclosure, the sensing requirement of the service corresponding to the sensing signal includes at least one of:
sensing a distance from the sensed target;
accuracy of the sensed distance;
sensing a range of angles with the sensed target;
accuracy of the sensed angle;
sensing a maximum speed of the sensed target; or
accuracy of the sensed speed.

Further, in another embodiment of the present disclosure, the apparatus is further configured to:
send sensing signal sending capability information to the network side device.

Further, in another embodiment of the present disclosure, the sensing signal sending capability information includes at least one of:
a signal type of a sensing signal sendable by the sensing signal sending end;
a sensing manner supported by the sensing signal sending end; or
a receiving and sending mode of the sensing signal.

Further, in another embodiment of the present disclosure, the sensing manner includes at least one of:
TOF sensing; or
PAC sensing.

Further, in another embodiment of the present disclosure, the receiving and sending mode of the sensing signal includes at least one of:
the sensing signal sending end is a base station, the sensing signal receiving end is a base station, and the sensing signal sending end and the sensing signal receiving end are different base stations;
the sensing signal sending end is a base station, the sensing signal receiving end is the base station, and the sensing signal sending end and the sensing signal receiving end are the same base station;
the sensing signal sending end is a wireless access point, the sensing signal receiving end is a wireless access point, and the sensing signal sending end and the sensing signal receiving end are different wireless access points;
the sensing signal sending end is a wireless access point, the sensing signal receiving end is the wireless access point, and the sensing signal sending end and the sensing signal receiving end are the same wireless access point;
the sensing signal sending end is a user equipment UE, the sensing signal receiving end is a UE, and the sensing signal sending end and the sensing signal receiving end are different UEs.
the sensing signal sending end is a UE, the sensing signal receiving end is the UE, and the sensing signal sending end and the sensing signal receiving end are the same UE;
the sensing signal sending end is a base station, and the sensing signal receiving end is a UE;
the sensing signal sending end is a UE, and the sensing signal receiving end is a base station;
the sensing signal sending end is a wireless access point, and the sensing signal receiving end is a UE; or
the sensing signal sending end is a UE, and the sensing signal receiving end is a wireless access point.

Further, in another embodiment of the present disclosure, the sensing signal sending end includes any one of:
a base station;
a wireless access point; or
a UE.

FIG. 12 is a schematic structural diagram of a sensing signal configuration apparatus 1200 according to another embodiment of the present disclosure.
a receiving module 1201, configured to receive sensing signal configuration information sent by a network side device, where the sensing signal configuration information includes at least one of: type information of a sensing signal, resource configuration information of the sensing signal, or service information corresponding to the sensing signal; and
the receiving module 1201 is further configured to receive, based on the sensing signal configuration information, a sensing signal sent by a sensing signal sending end.

As described above, in the sensing signal configuration apparatus provided by the embodiment of the present disclosure, the sensing signal receiving end may receive the sensing signal configuration information sent by the network side device, and receive a sensing signal sent by a sensing signal sending end based on the sensing signal configuration information. It can be learned that, in the embodiments of the present disclosure, the network side device configures and sends a sensing signal to at least one of the sensing signal sending end or the sensing signal receiving end, to avoid a transmission conflict between the sensing signal and other receiving signals of other signal receiving ends, reduce interference of the sensing signal on other signal receiving ends, and improve transmission performance of the communication system.

In an embodiment of the present disclosure, the network side device includes any one of:
a base station;
a wireless access point; or
a core network entity.

Further, in another embodiment of the present disclosure, the core network entity includes any one of:
an AMF;
a UPF;
an MME; or
a service gateway.

Further, in another embodiment of the present disclosure, the type information of the sensing signal includes at least one of:
a waveform of the sensing signal; or
a signal type of the sensing signal.

Further, in another embodiment of the present disclosure, the waveform of the sensing signal includes at least one of:
an OFDM symbol waveform;
a pulse waveform; or
a FMCW.

Further, in another embodiment of the present disclosure, the signal type of the sensing signal includes at least one of:
an SSB;
a CSI-RS;
an SRS; or
a PRACH.

Further, in another embodiment of the present disclosure, the resource configuration information of the sensing signal includes at least one of:
a time-domain resource configuration corresponding to the sensing signal;
a frequency-domain resource configuration corresponding to the sensing signal;
a coding resource configuration corresponding to the sensing signal; or
a spatial resource configuration corresponding to the sensing signal.

Further, in another embodiment of the present disclosure, the time-domain resource configuration corresponding to the sensing signal includes at least one of:
a start resource position of a time-domain resource;
a resource allocation period of the time-domain resource; or
an available resource position in each resource allocation period of the time-domain resource.

Further, in another embodiment of the present disclosure, the frequency-domain resource configuration corresponding to the sensing signal includes at least one of:
frequency point information corresponding to the sensing signal;
BWP information corresponding to the sensing signal;
PRB information corresponding to the sensing signal;
bandwidth information corresponding to the sensing signal.

Further, in another embodiment of the present disclosure, the PRB information corresponding to the sensing signal includes at least one of:
a start PRB identifier;
an end PRB identifier; or
a number of PRBs.

Further, in another embodiment of the present disclosure, the spatial resource configuration corresponding to the sensing signal includes at least one of:
a spatial resource identifier corresponding to the sensing signal; or
a corresponding relationship between the spatial resource identifier and the sensing signal.

Further, in another embodiment of the present disclosure, the spatial resource identifier corresponding to the sensing signal includes at least one of:
a TCI identifier;
an SSB identifier;
a CSI-RS identifier; or
an SRS identifier.

Further, in another embodiment of the present disclosure, the service information corresponding to the sensing signal includes at least one of:
information of a sensed target;
service identifier information of a service corresponding to the sensing signal;
bearer information corresponding to the sensing signal, where the bearer information is bearer information corresponding to the service corresponding to the sensing signal;
service type information of the service corresponding to the sensing signal; or
a sensing requirement of the service corresponding to the sensing signal.

Further, in another embodiment of the present disclosure, the information of the sensed target includes at least one of:
a region position of the sensed target;
a type of sensed target; or
an identifier of the sensed target.

Further, in another embodiment of the present disclosure, the bearer information corresponding to the sensing signal includes at least one of:
a session identifier corresponding to the sensing signal;
a service flow identifier corresponding to the sensing signal;
a radio bearer identifier corresponding to the sensing signal; or
a logical channel identifier corresponding to the sensing signal.

Further, in another embodiment of the present disclosure, the service type information of the service corresponding to the sensing signal includes at least one of:
weather forecast sensing;
traffic congestion sensing;
pulse sensing;
3D imaging sensing; or
AR game sensing.

Further, in another embodiment of the present disclosure, the sensing requirement of the service corresponding to the sensing signal includes at least one of:
sensing a distance from the sensed target;
accuracy of the sensed distance;
sensing a range of angles with the sensed target;
accuracy of the sensed angle;
sensing a maximum speed of the sensed target; or
accuracy of the sensed speed.

Further, in another embodiment of the present disclosure, the apparatus is further configured to:
send sensing signal receiving capability information to the network side device.

Further, in another embodiment of the present disclosure, the sensing signal receiving capability information includes at least one of:
a signal type of the sensing signal receivable by the sensing signal receiving end;
a sensing manner supported by the sensing signal receiving end; or
a receiving and sending mode of the sensing signal.

Further, in another embodiment of the present disclosure, the sensing manner includes at least one of:
TOF sensing; or
PAC sensing.

Further, in another embodiment of the present disclosure, the receiving and sending mode of the sensing signal includes at least one of:
the sensing signal sending end is a base station, the sensing signal receiving end is a base station, and the sensing signal sending end and the sensing signal receiving end are different base stations;
the sensing signal sending end is a base station, the sensing signal receiving end is the base station, and the sensing signal sending end and the sensing signal receiving end are the same base station;
the sensing signal sending end is a wireless access point, the sensing signal receiving end is a wireless access point, and the sensing signal sending end and the sensing signal receiving end are different wireless access points;
the sensing signal sending end is a wireless access point, the sensing signal receiving end is the wireless access point, and the sensing signal sending end and the sensing signal receiving end are the same wireless access point;
the sensing signal sending end is a UE, the sensing signal receiving end is a UE, and the sensing signal sending end and the sensing signal receiving end are different UEs;
the sensing signal sending end is a UE, the sensing signal receiving end is the UE, and the sensing signal sending end and the sensing signal receiving end are the same UE;
the sensing signal sending end is a base station, and the sensing signal receiving end is a UE;
the sensing signal sending end is a UE, and the sensing signal receiving end is a base station;
the sensing signal sending end is a wireless access point, and the sensing signal receiving end is a UE; or
the sensing signal sending end is a UE, and the sensing signal receiving end is a wireless access point.

Further, in another embodiment of the present disclosure, the sensing signal sending end includes any one of:
a base station;
a wireless access point; or
a UE.

A computer storage medium provided by the embodiments of the present disclosure stores an executable program, and when the executable program is executed by a processor, the method according to any one of FIG. 1-FIG. 5, FIG. 6-FIG. 7, or FIG. 8-FIG. 9 can be implemented.

To implement the above embodiments, the present disclosure further provides a computer program product, including a computer program, where when the computer program is executed by a processor, the method according to any one of FIG. 1-FIG. 5, FIG. 6-FIG. 7, or FIG. 8-FIG. 9 is implemented.

To implement the above embodiments, the present disclosure further provides a network side device, including: a transceiver; a memory; and a processor coupled to the transceiver and the memory respectively, and configured to control wireless signal transceiving of the transceiver by executing a computer executable instruction on the memory, and to implement the method according to any one of FIG. 1-FIG. 5, FIG. 6-FIG. 7, or FIG. 8-FIG. 9.

In addition, to implement the above embodiments, the present disclosure further provides a computer program, and when the program is executed by a processor, the method according to any one of FIG. 1-FIG. 5, FIG. 6-FIG. 7, or FIG. 8-FIG. 9 is implemented.

FIG. 13 is a block diagram of a user equipment (UE) 1300 according to an embodiment of the present disclosure. For example, the UE 1300 may be a mobile phone, a computer, a digital broadcast terminal device, a messaging device, a game console, a tablet device, a medical device, a fitness device, a personal digital assistant, or the like.

Referring to FIG. 13, the UE 1300 may include at least one of: a processing component 1302, a memory 1304, a power component 1306, a multimedia component 1308, an audio component 1310, an input/output (I/O) interface 1312, a sensor component 1314, and a communication component 1316.

The processing component 1302 generally controls overall operations of the UE 1300, such as operations associated with display, telephone call, data communication, camera operation and recording operation. The processing component 1302 may include at least one processor 1320 to execute instructions to complete all or part of steps of the method described above. In addition, the processing component 1302 can include at least one module to facilitate interaction between the processing component 1302 and other components. For example, the processing component 1302 can include a multimedia module to facilitate interaction between the multimedia component 1308 and the processing component 1302.

The memory 1304 is configured to store various types of data to support operations at the UE 1300. Examples of these data include instructions for any application or method operating on the UE 1300, contact data, phone book data, messages, pictures, videos, and the like. The memory 1304 can be realized by any type of volatile or nonvolatile memory device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 1306 provides power to various components of the UE 1300. Power component 1306 may include a power management system, at least one power source, and other components associated with generating, managing, and distributing power for UE 1300.

The multimedia component 1308 includes a screen providing an output interface between the UE 1300 and the user. In some embodiments, the screen may include a liquid crystal display (LCD) and a touch panel (TP). If the screen includes a touch panel, the screen may be implemented as a touch screen to receive an input signal from a user. The touch panel includes at least one touch sensor to sense touch, sliding and gestures on the touch panel. The touch sensor may not only sense the boundary of a touch or sliding action, but also detect a wake-up time and pressure related to the touch or sliding operation. In some embodiments, the multimedia component 1308 includes a front camera and/or a rear camera. When the UE1300 is in an operation mode, such as a shooting mode or a video mode, the front camera and/or the rear camera may receive external multimedia data. Each front camera and rear camera can be a fixed optimal lens system or have focal length and optimal zoom capability.

The audio component 1310 is configured to output and/or input audio signals. For example, the audio component 1310 includes a microphone (MIC) configured to receive external audio signals when the UE 1300 is in operation modes, such as a call mode, a recording mode and a voice recognition mode. The received audio signal may be further stored in the memory 1304 or transmitted via the communication component 1316. In some embodiments, the audio component 1310 further includes a speaker for outputting audio signals.

I/O interface 1312 provides an interface between processing component 1302 and peripheral interface modules, which can be keyboards, clickwheels, buttons, etc. These buttons may include, but are not limited to, home button, volume button, start button and lock button.

The sensor component 1314 includes at least one sensor for providing various aspects of state evaluation for the UE 1300. For example, the sensor component 1314 can detect an ON/OFF state of the UE 1300, the relative positioning of components, such as the display and keypad of the UE 1300, the position change of the UE 1300 or a component of the UE 1300, the presence or absence of user contact with the UE 1300, the orientation or acceleration/deceleration of the UE 1300 and the temperature change of the UE 1300. The sensor component 1314 may include a proximity sensor configured to detect the presence of a nearby obj ect without any physical contact. The sensor component 1314 may also include an optical sensor, such as a CMOS or CCD image sensor, for use in imaging applications. In some embodiments, the sensor component 1314 may further include an acceleration sensor, a gyro sensor, a magnetic sensor, a pressure sensor or a temperature sensor.

The communication component 1316 is configured to facilitate wired or wireless communication between the UE 1300 and other devices. UE 1300 may access a wireless network based on a communication standard, such as WiFi, 2G, or 3G, or a combination thereof. In an exemplary embodiment, the communication component 1316 receives a broadcast signal or broadcast related information from an external broadcast management system via a broadcast channel. In an exemplary embodiment, the communication component 1316 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the UE 1300 may be implemented by at least one application specific integrated circuit (ASIC), a digital signal processor (DSP), a digital signal processing device (DSPD), a programmable logic device (PLD), a field programmable gate array (FPGA), a controller, a micro-controller, a microprocessor or other electronic components, and is configured to perform the above method.

FIG. 14 is a block diagram of a base station 1400 according to an embodiment of the present disclosure. For example, the base station 1400 may be provided as a base station. Referring to FIG. 14, the base station 1400 includes a processing component 1422, which further includes at least one processor, and a memory resource represented by a memory 1432 for storing instructions executable by a processing component 1422, such as an application program. The application program stored in the memory 1432 may include one or more modules each corresponding to a set of instructions. In addition, the processing component 1422 is configured to execute instructions to perform any of the above methods applied to the base station, for example, the method according to FIG. 1.

The base station 1400 may also include a power component 1426 configured to perform power management of the base station 1400, a wired or wireless network interface 1450 configured to connect the base station 1400 to a network, and an input/output (I/O) interface 1458. The base station 1400 may operate based on an operating system stored in memory 1432, such as Windows Server TM, Mac OS XTM, Unix TM, Linux TM, Free BSDTM, or the like.

Those of ordinary skills in the art will easily think of other embodiments of the present disclosure after considering the specification and practicing the disclosure disclosed herein. The present disclosure is intended to cover any variation, use or adaptation of the present disclosure, which follows the general principles of the present disclosure and includes common sense or common technical means in the technical field not disclosed in this disclosure. The specification and examples are to be regarded as exemplary only, with the true scope and spirit of the disclosure being indicated by the following claims.

It should be understood that the present disclosure is not limited to the precise structure described above and shown in the drawings, and various modifications and changes can be made without departing from its scope. The scope of the present disclosure is limited only by the appended claims.

## Claims

1. A sensing signal configuration method, performed by a network side device, comprising:
determining sensing signal configuration information, wherein the sensing signal configuration information comprises at least one of type information of a sensing signal, resource configuration information of the sensing signal, or service information corresponding to the sensing signal; and
sending the sensing signal configuration information to at least one of a sensing signal sending end or a sensing signal receiving end.

2. The method according to claim 1, wherein the network side device comprises any one of:
a base station;
a wireless access point; or
a core network entity.

3. The method according to claim 2, wherein the core network entity comprises any one of:
an access and mobility management function (AMF);
a user plane function (UPF);
a mobility management entity (MME); or
a service gateway.

4. The method according to claim 1, wherein the type information of the sensing signal comprises at least one of
a waveform of the sensing signal; or
a signal type of the sensing signal.

5. The method according to claim 4, wherein the waveform of the sensing signal comprises at least one of:
an orthogonal frequency division multiplexing (OFDM) symbol waveform;
a pulse waveform; or
a frequency modulated continuous wave (FMCW).

6. The method according to claim 4, wherein the signal type of the sensing signal comprises at least one of:
a synchronization signal block (SSB);
a channel state information reference signal (CSI-RS);
a sounding reference signal (SRS); or
a physical random access channel (PRACH).

7. The method according to claim 1, wherein the resource configuration information of the sensing signal comprises at least one of:
a time-domain resource configuration corresponding to the sensing signal;
a frequency-domain resource configuration corresponding to the sensing signal;
a coding resource configuration corresponding to the sensing signal; or
a spatial resource configuration corresponding to the sensing signal.

8. The method according to claim 7, wherein the time-domain resource configuration corresponding to the sensing signal comprises at least one of:
a start resource position of a time-domain resource;
a resource allocation period of the time-domain resource; or
an available resource position in each resource allocation period of the time-domain resource.

9. The method according to claim 7, wherein the frequency-domain resource configuration corresponding to the sensing signal comprises at least one of:
frequency point information corresponding to the sensing signal;
bandwidth part (BWP) information corresponding to the sensing signal;
physical resource block (PRB) information corresponding to the sensing signal; or
bandwidth information corresponding to the sensing signal.

10. The method according to claim 9, wherein the PRB information corresponding to the sensing signal comprises at least one of:
a start PRB identifier;
an end PRB identifier; or
a number of PRBs.

11. The method according to claim 7, wherein the spatial resource configuration corresponding to the sensing signal comprises at least one of:
a spatial resource identifier corresponding to the sensing signal; or
a corresponding relationship between the spatial resource identifier and the sensing signal.

12. The method according to claim 11, wherein the spatial resource identifier corresponding to the sensing signal comprises at least one of:
a transmission configuration identifier (TCI) identifier;
an SSB identifier;
a CSI-RS identifier; or
an SRS identifier.

13. The method according to claim 1, wherein the service information corresponding to the sensing signal comprises at least one of:
information of a sensed target;
service identifier information of a service corresponding to the sensing signal;
bearer information corresponding to the sensing signal, wherein the bearer information is bearer information corresponding to the service corresponding to the sensing signal;
service type information of the service corresponding to the sensing signal; or
a sensing requirement of the service corresponding to the sensing signal.

14. The method according to claim 13, wherein the information of the sensed target comprises at least one of:
a region position of the sensed target;
a type of sensed target; or
an identifier of the sensed target.

15. The method according to claim 13, wherein the bearer information corresponding to the sensing signal comprises at least one of:
a session identifier corresponding to the sensing signal;
a service flow identifier corresponding to the sensing signal;
a radio bearer identifier corresponding to the sensing signal; or
a logical channel identifier corresponding to the sensing signal.

16. The method according to claim 13, wherein the service type information of the service corresponding to the sensing signal comprises at least one of:
weather forecast sensing;
traffic congestion sensing;
pulse sensing;
three-dimensional (3D) imaging sensing; or
augmented reality (AR) game sensing.

17. The method according to claim 13, wherein the sensing requirement of the service corresponding to the sensing signal comprises at least one of:
sensing a distance from the sensed target;
accuracy of a sensed distance;
sensing a range of angles with the sensed target;
accuracy of a sensed angle;
sensing a maximum speed of the sensed target; or
accuracy of a sensed speed.

18. The method according to claim 1, wherein the sensing signal sending end, the sensing signal receiving end and the network side device are different devices.

19. The method according to claim 18, further comprising:
receiving sensing signal sending capability information sent by the sensing signal sending end, and sensing signal receiving capability information sent by the sensing signal receiving end.

20. The method according to claim 1, wherein the sensing signal sending end is a same device as the network side device, and is a different device from the sensing signal receiving end.

21. The method according to claim 20, further comprising:
determining sensing signal sending capability information of the sensing signal sending end; and
receiving sensing signal receiving capability information sent by the sensing signal receiving end.

22. The method according to claim 1, wherein the sensing signal receiving end is a same device as the network side device, and is a different device from the sensing signal sending end.

23. The method according to claim 22, further comprising:
determining sensing signal receiving capability information of the sensing signal receiving end; and
receiving sensing signal sending capability information sent by the sensing signal sending end.

24. The method according to claim 19 or 21 or 23, wherein the determining the sensing signal configuration information comprises:
determining the sensing signal configuration information based on at least one of the sensing signal receiving capability information or the sensing signal sending capability information.

25. The method according to claim 19 or 21 or 23, wherein the sensing signal sending capability information comprises at least one of:
a signal type of the sensing signal sendable by the sensing signal sending end;
a sensing manner supported by the sensing signal sending end; or
a receiving and sending mode of the sensing signal.

26. The method according to claim 19 or 21 or 23, wherein the sensing signal receiving capability information comprises at least one of:
a signal type of the sensing signal receivable by the sensing signal receiving end;
a sensing manner supported by the sensing signal receiving end; or
a receiving and sending mode of the sensing signal.

27. The method according to claim 25 or 26, wherein the sensing manner comprises at least one of:
time-of-flight (TOF) sensing; or
phase amplitude change (PAC) sensing.

28. The method according to claim 25 or 26, wherein the receiving and sending mode of the sensing signal comprises at least one of:
the sensing signal sending end is a base station, the sensing signal receiving end is a base station, and the sensing signal sending end and the sensing signal receiving end are different base stations;
the sensing signal sending end is a base station, the sensing signal receiving end is the base station, and the sensing signal sending end and the sensing signal receiving end are the same base station;
the sensing signal sending end is a wireless access point, the sensing signal receiving end is a wireless access point, and the sensing signal sending end and the sensing signal receiving end are different wireless access points;
the sensing signal sending end is a wireless access point, the sensing signal receiving end is the wireless access point, and the sensing signal sending end and the sensing signal receiving end are the same wireless access point;
the sensing signal sending end is a user equipment (UE), the sensing signal receiving end is a UE, and the sensing signal sending end and the sensing signal receiving end are different UEs;
the sensing signal sending end is a UE, the sensing signal receiving end is the UE, and the sensing signal sending end and the sensing signal receiving end are the same UE;
the sensing signal sending end is a base station, and the sensing signal receiving end is a UE;
the sensing signal sending end is a UE, and the sensing signal receiving end is a base station;
the sensing signal sending end is a wireless access point, and the sensing signal receiving end is a UE; or
the sensing signal sending end is a UE, and the sensing signal receiving end is a wireless access point.

29. The method according to any one of claims 1-27, wherein the sensing signal sending end and the sensing signal sending end are a same device.

30. The method according to any one of claims 1-27, wherein the sensing signal sending end and the sensing signal sending end are different devices.

31. The method according to any one of claims 1-27, wherein the sensing signal sending end comprises any one of:
a base station;
a wireless access point; or
a UE.

32. The method according to any one of claims 1-27, wherein the sensing signal receiving end comprises any one of:
a base station;
a wireless access point; or
a UE.

33. A sensing signal configuration method, performed by a sensing signal sending end, comprising:
receiving sensing signal configuration information sent by a network side device, wherein the sensing signal configuration information comprises at least one of: type information of a sensing signal, resource configuration information of the sensing signal, or service information corresponding to the sensing signal; and
sending the sensing signal to a sensing signal receiving end based on the sensing signal configuration information.

34. The method according to claim 33, wherein the network side device comprises any one of:
a base station;
a wireless access point; or
a core network entity.

35. The method according to claim 34, wherein the core network entity comprises any one of:
an AMF;
a UPF;
an MME; or
a service gateway.

36. The method according to claim 33, wherein the type information of the sensing signal comprises at least one of:
a waveform of the sensing signal; or
a signal type of the sensing signal.

37. The method according to claim 36, wherein the waveform of the sensing signal comprises at least one of:
an OFDM symbol waveform;
a pulse waveform; or
a FMCW.

38. The method according to claim 36, wherein the signal type of the sensing signal comprises at least one of:
an SSB;
a CSI-RS;
an SRS; or
a PRACH.

39. The method according to claim 33, wherein the resource configuration information of the sensing signal comprises at least one of:
a time-domain resource configuration corresponding to the sensing signal;
a frequency-domain resource configuration corresponding to the sensing signal;
a coding resource configuration corresponding to the sensing signal; or
a spatial resource configuration corresponding to the sensing signal.

40. The method according to claim 39, wherein the time-domain resource configuration corresponding to the sensing signal comprises at least one of:
a start resource position of a time-domain resource;
a resource allocation period of the time-domain resource; or
an available resource position in each resource allocation period of the time-domain resource.

41. The method according to claim 39, wherein the frequency-domain resource configuration corresponding to the sensing signal comprises at least one of:
frequency point information corresponding to the sensing signal;
BWP information corresponding to the sensing signal;
PRB information corresponding to the sensing signal; or
bandwidth information corresponding to the sensing signal.

42. The method according to claim 41, wherein the PRB information corresponding to the sensing signal comprises at least one of:
a start PRB identifier;
an end PRB identifier; or
a number of PRBs.

43. The method according to claim 39, wherein the spatial resource configuration corresponding to the sensing signal comprises at least one of:
a spatial resource identifier corresponding to the sensing signal; or
a corresponding relationship between the spatial resource identifier and the sensing signal.

44. The method according to claim 43, wherein the spatial resource identifier corresponding to the sensing signal comprises at least one of:
a TCI identifier;
an SSB identifier;
a CSI-RS identifier; or
an SRS identifier.

45. The method according to claim 33, wherein the service information corresponding to the sensing signal comprises at least one of:
information of a sensed target;
service identifier information of a service corresponding to the sensing signal;
bearer information corresponding to the sensing signal, wherein the bearer information is bearer information corresponding to the service corresponding to the sensing signal;
service type information of the service corresponding to the sensing signal; or
a sensing requirement of the service corresponding to the sensing signal.

46. The method according to claim 44, wherein the information of the sensed target comprises at least one of:
a region position of the sensed target;
a type of sensed target; or
an identifier of the sensed target.

47. The method according to claim 45, wherein the bearer information corresponding to the sensing signal comprises at least one of:
a session identifier corresponding to the sensing signal;
a service flow identifier corresponding to the sensing signal;
a radio bearer identifier corresponding to the sensing signal; or
a logical channel identifier corresponding to the sensing signal.

48. The method according to claim 45, wherein the service type information of the service corresponding to the sensing signal comprises at least one of:
weather forecast sensing;
traffic congestion sensing;
pulse sensing;
3D imaging sensing; or
AR game sensing.

49. The method according to claim 45, wherein the sensing requirement of the service corresponding to the sensing signal comprises at least one of:
sensing a distance from the sensed target;
accuracy of a sensed distance;
sensing a range of angles with the sensed target;
accuracy of a sensed angle;
sensing a maximum speed of the sensed target; or
accuracy of a sensed speed.

50. The method according to claim 33, further comprising:
sending sensing signal sending capability information to the network side device.

51. The method according to claim 50, wherein the sensing signal sending capability information comprises at least one of:
a signal type of the sensing signal sendable by the sensing signal sending end;
a sensing manner supported by the sensing signal sending end; or
a receiving and sending mode of the sensing signal.

52. The method according to claim 51, wherein the sensing manner comprises at least one of:
TOF sensing; or
PAC sensing.

53. The method according to claim 52, wherein the receiving and sending mode of the sensing signal comprises at least one of:
the sensing signal sending end is a base station, the sensing signal receiving end is a base station, and the sensing signal sending end and the sensing signal receiving end are different base stations;
the sensing signal sending end is a base station, the sensing signal receiving end is the base station, and the sensing signal sending end and the sensing signal receiving end are the same base station;
the sensing signal sending end is a wireless access point, the sensing signal receiving end is a wireless access point, and the sensing signal sending end and the sensing signal receiving end are different wireless access points;
the sensing signal sending end is a wireless access point, the sensing signal receiving end is the wireless access point, and the sensing signal sending end and the sensing signal receiving end are the same wireless access point;
the sensing signal sending end is a user equipment (UE), the sensing signal receiving end is a UE, and the sensing signal sending end and the sensing signal receiving end are different UEs;
the sensing signal sending end is a UE, the sensing signal receiving end is the UE, and the sensing signal sending end and the sensing signal receiving end are the same UE;
the sensing signal sending end is a base station, and the sensing signal receiving end is a UE;
the sensing signal sending end is a UE, and the sensing signal receiving end is a base station;
the sensing signal sending end is a wireless access point, and the sensing signal receiving end is a UE; or
the sensing signal sending end is a UE, and the sensing signal receiving end is a wireless access point.

54. The method according to any one of claims 33-53, wherein the sensing signal sending end comprises any one of:
a base station;
a wireless access point; or
a UE.

55. A sensing signal configuration method, performed by a sensing signal receiving end, comprising:
receiving sensing signal configuration information sent by a network side device, wherein the sensing signal configuration information comprises at least one of: type information of a sensing signal, resource configuration information of the sensing signal, or service information corresponding to the sensing signal; and
receiving, based on the sensing signal configuration information, a sensing signal sent by a sensing signal sending end.

56. The method according to claim 55, wherein the network side device comprises any one of:
a base station;
a wireless access point; or
a core network entity.

57. The method according to claim 56, wherein the core network entity comprises any one of:
an AMF;
a UPF;
an MME; or
a service gateway.

58. The method according to claim 55, wherein the type information of the sensing signal comprises at least one of:
a waveform of the sensing signal; or
a signal type of the sensing signal.

59. The method according to claim 58, wherein the waveform of the sensing signal comprises at least one of:
an OFDM symbol waveform;
a pulse waveform; or
a FMCW.

60. The method according to claim 58, wherein the signal type of the sensing signal comprises at least one of:
an SSB;
a CSI-RS;
an SRS; or
a PRACH.

61. The method according to claim 58, wherein the resource configuration information of the sensing signal comprises at least one of:
a time-domain resource configuration corresponding to the sensing signal;
a frequency-domain resource configuration corresponding to the sensing signal;
a coding resource configuration corresponding to the sensing signal; or
a spatial resource configuration corresponding to the sensing signal.

62. The method according to claim 61, wherein the time-domain resource configuration corresponding to the sensing signal comprises at least one of:
a start resource position of a time-domain resource;
a resource allocation period of the time-domain resource; or
an available resource position in each resource allocation period of the time-domain resource.

63. The method according to claim 61, wherein the frequency-domain resource configuration corresponding to the sensing signal comprises at least one of:
frequency point information corresponding to the sensing signal;
BWP information corresponding to the sensing signal;
PRB information corresponding to the sensing signal; or
bandwidth information corresponding to the sensing signal.

64. The method according to claim 63, wherein the PRB information corresponding to the sensing signal comprises at least one of:
a start PRB identifier;
an end PRB identifier; or
a number of PRBs.

65. The method according to claim 61, wherein the spatial resource configuration corresponding to the sensing signal comprises at least one of:
a spatial resource identifier corresponding to the sensing signal; or
a corresponding relationship between the spatial resource identifier and the sensing signal.

66. The method according to claim 65, wherein the spatial resource identifier corresponding to the sensing signal comprises at least one of:
a TCI identifier;
an SSB identifier;
a CSI-RS identifier; or
an SRS identifier.

67. The method according to claim 65, wherein the service information corresponding to the sensing signal comprises at least one of:
information of a sensed target;
service identifier information of a service corresponding to the sensing signal;
bearer information corresponding to the sensing signal, wherein the bearer information is bearer information corresponding to the service corresponding to the sensing signal;
service type information of the service corresponding to the sensing signal; or
a sensing requirement of the service corresponding to the sensing signal.

68. The method according to claim 66, wherein the information of the sensed target comprises at least one of:
a region position of the sensed target;
a type of sensed target; or
an identifier of the sensed target.

69. The method according to claim 67, wherein the bearer information corresponding to the sensing signal comprises at least one of:
a session identifier corresponding to the sensing signal;
a service flow identifier corresponding to the sensing signal;
a radio bearer identifier corresponding to the sensing signal; or
a logical channel identifier corresponding to the sensing signal.

70. The method according to claim 67, wherein the service type information of the service corresponding to the sensing signal comprises at least one of:
weather forecast sensing;
traffic congestion sensing;
pulse sensing;
3D imaging sensing; or
AR game sensing.

71. The method according to claim 67, wherein the sensing requirement of the service corresponding to the sensing signal comprises at least one of:
sensing a distance from the sensed target;
accuracy of a sensed distance;
sensing a range of angles with the sensed target;
accuracy of a sensed angle;
sensing a maximum speed of the sensed target; or
accuracy of a sensed speed.

72. The method according to claim 55, further comprising:
sending sensing signal receiving capability information to the network side device.

73. The method according to claim 72, wherein the sensing signal receiving capability information comprises at least one of:
a signal type of the sensing signal receivable by the sensing signal receiving end;
a sensing manner supported by the sensing signal receiving end; or
a receiving and sending mode of the sensing signal.

74. The method according to claim 73, wherein the sensing manner comprises at least one of:
TOF sensing; or
PAC sensing.

75. The method according to claim 73, wherein the receiving and sending mode of the sensing signal comprises at least one of:
the sensing signal sending end is a base station, the sensing signal receiving end is a base station, and the sensing signal sending end and the sensing signal receiving end are different base stations;
the sensing signal sending end is a base station, the sensing signal receiving end is the base station, and the sensing signal sending end and the sensing signal receiving end are the same base station;
the sensing signal sending end is a wireless access point, the sensing signal receiving end is a wireless access point, and the sensing signal sending end and the sensing signal receiving end are different wireless access points;
the sensing signal sending end is a wireless access point, the sensing signal receiving end is the wireless access point, and the sensing signal sending end and the sensing signal receiving end are the same wireless access point;
the sensing signal sending end is a user equipment (UE), the sensing signal receiving end is a UE, and the sensing signal sending end and the sensing signal receiving end are different UEs;
the sensing signal sending end is a UE, the sensing signal receiving end is the UE, and the sensing signal sending end and the sensing signal receiving end are the same UE;
the sensing signal sending end is a base station, and the sensing signal receiving end is a UE;
the sensing signal sending end is a UE, and the sensing signal receiving end is a base station;
the sensing signal sending end is a wireless access point, and the sensing signal receiving end is a UE; or
the sensing signal sending end is a UE, and the sensing signal receiving end is a wireless access point.

76. The method according to any one of claims 55-75, wherein the sensing signal sending end comprises any one of:
a base station;
a wireless access point; or
a UE.

77. A sensing signal configuration apparatus, comprising:
a determining module, configured to determine sensing signal configuration information, wherein the sensing signal configuration information comprises at least one of: type information of a sensing signal, resource configuration information of the sensing signal, or service information corresponding to the sensing signal; and
a sending module, configured to send the sensing signal configuration information to at least one of a sensing signal sending end or a sensing signal receiving end.

78. A sensing signal configuration apparatus, comprising:
a receiving module, configured to receive sensing signal configuration information sent by a network side device, wherein the sensing signal configuration information comprises at least one of: type information of a sensing signal, resource configuration information of the sensing signal, or service information corresponding to the sensing signal; and
a sending module, configured to send a sensing signal to a sensing signal receiving end based on the sensing signal configuration information.

79. A sensing signal configuration apparatus, comprising:
a receiving module, configured to receive sensing signal configuration information sent by a network side device, wherein the sensing signal configuration information comprises at least one of: type information of a sensing signal, resource configuration information of the sensing signal, or service information corresponding to the sensing signal; and
the receiving module is further configured to receive, based on the sensing signal configuration information, a sensing signal sent by a sensing signal sending end.

80. A user equipment, comprising: a transceiver; a memory; and a processor coupled to the transceiver and the memory respectively, and configured to control wireless signal transceiving of the transceiver by executing a computer executable instruction on the memory, and to implement the method according to any one of claims 1-32, 33-54, or 55-76.

81. A base station, comprising: a transceiver; a memory; and a processor coupled to the transceiver and the memory respectively, and configured to control wireless signal transceiving of the transceiver by executing a computer executable instruction on the memory, and to implement the method according to any one of claims 1-32, 33-54, or 55-76.

82. A network side device, comprising: a transceiver; a memory; and a processor coupled to the transceiver and the memory respectively, and configured to control wireless signal transceiving of the transceiver by executing a computer executable instruction on the memory, and to implement the method according to any one of claims 1-32, 33-54, or 55-76.

83. A computer storage medium, wherein the computer storage medium stores a computer executable instruction; when the computer executable instruction is executed by a processor, the method according to any one of claims 1-32, 33-54, or 55-76 is implemented.
